# EUROPEAN PATENT SPECIFICATION

(11) **EP 0 559 811 B1**
(45) Date of publication and mention of the grant of the patent: **25.03.1998**
(21) Application number: 92902469.3
(22) Date of filing: 27.11.1991
(51) Int. Cl.: G02F 1/35

(54) **OPTICAL SWITCH**
OPTISCHER SCHALTER
COMMUTATEUR OPTIQUE

(30) Priority: 27.11.1990 GB 9025793
(43) Date of publication of application: 15.09.1993
(73) Proprietor: BRITISH TELECOMMUNICATIONS public limited company, London EC1A 7AJ (GB)
(72) Inventor: BLOW, Keith, James, Suffolk IP12 1HA (GB); DORAN, Nicholas, John 8 Swift Road, Warwickshire CV37 6TS (GB)
(74) Representative: Roberts, Simon Christopher
(86) International application number: PCT/GB91/02091
(87) International publication number: WO 92/09916

(56) References cited:
- OPTICS LETTERS. vol. 15, no. 4, 15 February 1990, NEW YORK US pages 248 - 250; K.J.BLOW ET AL.: 'Two-wavelength operation of the nonlinear fiber loop mirror'
- IEEE PHOTONICS TECHNOLOGY LETTERS vol. 2, no. 5, May 1990, NEW YORK, US pages 349 - 351; M.JINNO ET AL.: 'Ultrafast,Low Power,and Highly Stable All-Optical Switching in an All Polarization Maintaining Fiber Sagnac Interferometer'

## Description

This invention relates to a method and an apparatus for controlling the intensity of an optical signal.

Optical interferometers have found application as all-optical switches in which an interferometer having an input port and an output port and in which an optical signal at a first wavelength coupled to the input port is split into two signal portions which later combine to provide an output signal at the output port of an intensity dependant on the phase difference between the portions when they combine, in which a control optical signal is also coupled to the interfermeter such that the phase difference between the signal portions at the output port is dependant on the intensity of the control optical signal.

An example of such optical switching is described in WO-A-9104593. The interferometer is configured as a Sagnac loop fabricated from an optical fibre which exhibits a non-linearity, i.e. its refractive index varies with the intensity of the optical signal. A cw optical source provides a cw optical signal at the first wavelength which is coupled to the input port which is split into two counterpropagating portions. A control signal at a second wavelength, in this case a received optical data signal, is coupled to the loop so that it propagates along the fibre loop in substantially one direction.

For a zero intensity data optical signal the first optical fibre coupler and the optical fibre, which form a Sagnac antiresonant interferometer, act as a fibre loop mirror to the cw probe optical signal in that the signal entering the coupler at the first port will be reflected, i.e. it will exit from that same port. This is because the two counter-propagating portions maintain the same relative phase. When a further optical signal propagates along the interaction section of the waveguide, so inducing a phase shift in that first portion which co-propagates with it, the condition for reflection is broken and some of the probe optical signal will exit the second port.

Other configurations of interferometer may be used. The Sagnac loop has the advantage of that the counter-propagating signals transverse the same fibre. A disadvantage is that it is a two-port device which can be overcome by using a four-port Mach-Zehnder, for example.

K.J. Blow et al. ("Two-wavelength operation of the nonlinear fibre loop mirror", Optics Letters, Vol. 15, No. 4, pp. 248-250) describe a method of controlling the intensity of an optical signal comprising splitting an input optical signal into two signals and propagating said two signals in opposite directions along an optical waveguide exhibiting non-linear refractive index while propagating a control optical signal unidirectionally along the optical waveguide so as to control the phase of said two signals, and interferometrically combining said two signals after propagation along the waveguide to produce a controlled output optical signal.

In the same document, J.K. Blow et al. also describe an apparatus for controlling the intensity of an optical signal comprising a loop interferometer including an optical waveguide exhibiting non-linear refractive index and optical coupling means, a source of an optical signal to be controlled coupled to the coupling means, and a source of an optical control signal coupled to the coupling means, the coupling means being configured such that the signal to be controlled is split into two signals which propagate in opposite directions along the waveguide, the control signal propagates unidirectionally along the waveguide for controlling the phase of said two signals and said two signals are combined interferometrically on re-entering the coupling means to produce an output signal at a port of the coupling means.

According to the present invention as defined in the appended claims, the control optical signal comprises at least two optical pulse streams, the characteristics of the pulse streams being such that they are non-interferometric. In an apparatus according to the present invention, the source of an optical control signal is configured to produce the two optical pulse streams.

In general, the pulses at the two wavelength bands will have different group delays so the control pulses will pass over the switched pulse during co-propagation.

A preferred embodiment of the present invention operates as a switch, wherein the source of an optical control signal is configured such that when all said pulse streams are present in the waveguide, said two signals are substantially anti-phase when interferomerically combined in said coupling means.

An embodiment of the present invention will now be described by way of example only with reference to the accompanying drawings of which:

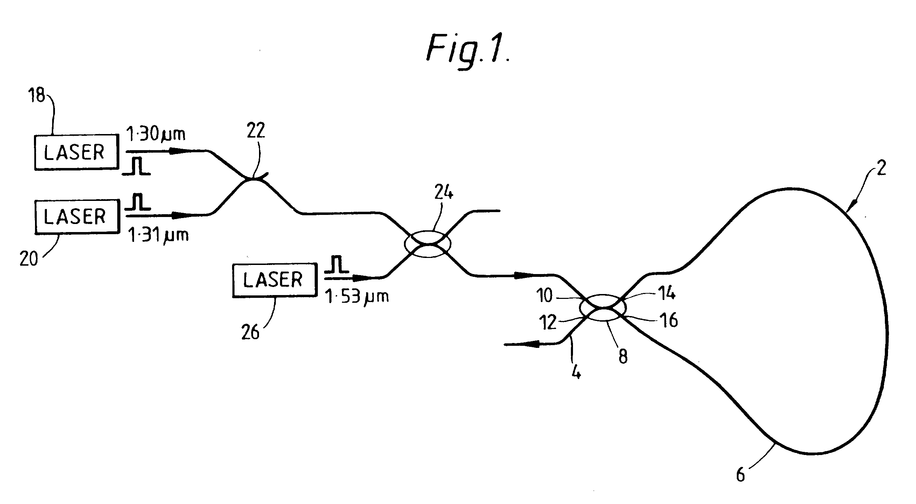

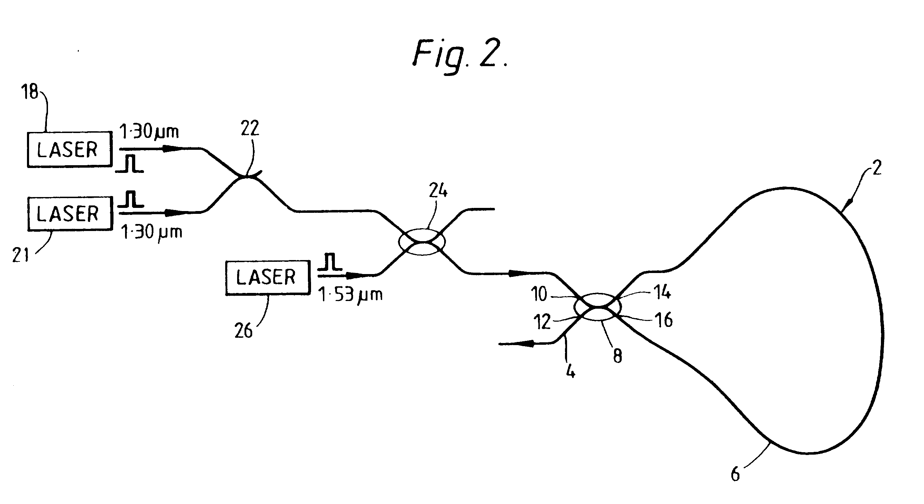

Figures 1 and 2 are schematic diagrams of a first and a second embodiment of the present invention, respectively.

Referring to Figure 1, a Sagnac antiresonant interferometer 2 is defined by a single silica optical fibre 4 formed into an optical fibre loop 6 with portions of the optical fibre being formed into a fused optical fibre coupler 8 having a first pair of ports 10, 12 and a second pair of ports 14, 16. The loop 6 exhibits a non-linear refractive index. The fibre loop 6 is 500m long and polarisation maintaining. The port 10 constitutes the input and port 12 the output port of the interferometer 2.

Modelocked Nd:YAG lasers 18 and 20 provide pulsed optical signals of 130ps pulse width at 1.30µm and 1.31µm which are combined by coupler 22 to form a control signal which coupled into the first port 10 by means of a dichroic coupler 22. Other suitable combinations of wavelengths falling within the broadband coupling characteristics of the couplers 8, 22 and 24 could be used.

A further modelocked Nd:YAG laser 22 provides optical signals of 130ps pulse width at 1.53µm which is also coupled to the port 10 of the coupler 8 by means of the optical coupler 24.

The coupler 8 is manufactured in well known manner so as to couple equal portions of the 1.53µm optical signal coupled to port 10 of the ports 14 and 16 to produce two counterpropagating, equal intensity portions in the loop 6 and to couple substantially all of the optical signals at 1.30µm and 1.31µm into port 14 (an extinction ratio of 37dB at 1.3µm) so the pulsed signal propagates in only one direction round loop 6. The coupler 24 is dichroic coupler in which the 1.53µm, 1.30µm and 1.31µm optical signals are combined.

The intensities of the pulses from lasers 18 and 20 are chosen such that the cross-phase modulation of each is sufficient to cause a 90° relative phase shift of the counter-propagating signals portions by the time they recombine at the coupler 8. When both pulses are present there will be a 180° relative phase shift which result in complete switching. A single pulse or no pulse will results in no or partial switching respectively. In such an arrangement the interferometer of Figure 1 acts as an and gate with the 1.53µm pulses being fully switched only if pulses at 1.30µm and 1.31µm are both present.

Other wavelengths may be used as convenient to match the properties of the interferometer.

If the pulses stream output of Figure 1, at 1.53µm, is to be combined, logically, with another optical pulse stream, the next interferometer will need to be configured such that the other optical pulse stream is at a different frequency, e.g. 1.54µm and that these two data streams when combined act as a control signal to switch a further data stream in the 1.3µm window of the interferometer. Such a concatenation of stages will. require optical amplifiers at both wavelength bands (here in the region of 1.30µm and 1.53µm) in order to maintain signal levels against losses in the fibre.

Figure 2 shows an alternative embodiment of the present invention which is as shown in Figure 1, with the same elements referenced by the same numerals, but in which the laser 20 of Figure 1 is replaced with a laser 21 operating at the same frequency as laser 18, 1.30µm. In this case, the optical pulses from the lasers are timed so that they do not overlap and so again are non-interferometric pulses.

The pulses from the lasers 18 and 21 are sufficiently close together that they can transverse across the same 1.53µm pulse propagating round the loop 6 so that they can both effect cross-phase-modulation independently by passing the pulse to be switched.

These schemes may be extended by coupling further sources of optical pulse streams to the interferometer. By suitable fixing of their intensities and perhaps with the application of a further, constant, bias optical pulse stream or cw optical signal, one could obtain an intensity of the output pulse signal at 1.53µm which is approximately proportional to the number of pulses in 1.3µm band which cross-phase-modulates that 1.53µm pulse.

## Claims

1. A method of controlling the intensity of an optical signal comprising splitting an input optical signal into two signals and propagating said two signals in opposite directions along an optical waveguide (6) exhibiting non-linear refractive index while propagating a control optical signal unidirectionally along the optical waveguide (6) so as to control the phase of said two signals, and interferometrically combining said two signals after propagation along the waveguide to produce a controlled output optical signal, **characterised in** that the control optical signal comprises at least two optical pulse streams, the characteristics of the pulse streams being such that they are non-interferometric.

2. A method according to claim 1, wherein the optical pulse streams have different wavelengths.

3. A method according to claim 1, wherein the optical pulse streams do not overlap when combined to form the control signal.

4. An apparatus for controlling the intensity of an optical signal comprising a loop interferometer (2) including an optical waveguide (6) exhibiting non-linear refractive index and optical coupling means (8), a source (24, 26) of an optical signal to be controlled coupled to the coupling means (8), and a source (18,20,22,24) of an optical control signal coupled to the coupling means (8), the coupling means (8) being configured such that the signal to be controlled is split into two signals which propagate in opposite directions along the waveguide (6), the control signal propagates unidirectionally along the waveguide for controlling the phase of said two signals and said two signals are combined interferometrically on re-entering the coupling means (8) to produce an output signal at a port (12) of the coupling means (8), characterised in that the source (18,20,22,24) of an optical control signal is configured to produce an control optical signal comprising at least two optical pulse streams, the characteristics of the pulse streams being such that they are non-interferometric.

5. An apparatus according to claim 4, wherein the source (18,20,22,24) of an optical control signal is configured to produce an control optical signal comprising at least two optical pulse streams having different wavelengths.

6. An apparatus according to claim 4, wherein the source (18,20,22,24) of an optical control signal comprises at least a first source (18) of optical pulses and a second source (20) of optical pulses, the pulses produced by said sources (18,20) having the same wavelength and not overlapping when combined to form the optical control signal.

7. An apparatus according to claim 4, 5 or 6, wherein the loop interferometer (2) comprises a Sagnac loop interferometer.

8. An apparatus according to claim 7, wherein the waveguide (6) comprises an optical fibre.

9. An apparatus according to claim 8, wherein the optical fibre is a silica-based optical fibre.

10. An optical switch comprising an apparatus according to any one of claims 4 to 9, wherein the source (18,20,22,24) of an optical control signal is configured such that when all said pulse streams are present in the waveguide, said two signals are substantially anti-phase when interferomerically combined in said coupling means (8).

## Patentansprüche

1. Verfahren zur Steuerung der Intensität eines optischen Signals, bei dem ein optisches Eingangssignal in zwei Signale geteilt wird, die sich in Gegenrichtungen entlang eines optischen Wellenleiters (6) mit nichtlinearem Brechungsindex ausbreiten, während sich ein optisches Steuersignal entlang des optischen Wellenleiters (6) in einer Richtung ausbreitet, um die Phase der zwei Signale zu steuern, wobei die erwähnten zwei Signale nach dem Durchlauf des Wellenleiters interferometrisch kombiniert werden, um ein gesteuertes optisches Ausgangssignal zu bilden, dadurch gekennzeichnet, daß das optische Steuersignal durch mindestens zwei Reihen optiecher Impulse gebildet ist, wobei die Charakteristiken der Impulsreihen derart gewählt sind, daß die Impulsreihen nicht interferieren.

2. Verfahren nach Anspruch 1 dadurch gekennzeichnet, daß die optischen Impulsreihen verschiedene Wellenlängen aufweisen.

3. Verfahren nach Anspruch 1 dadurch gekennzeichnet, daß die optischen Impulsreihen sich nicht überlappen, wenn sie zur Bildung des Steuersignals kombiniert werden.

4. Einrichtung zur Steuerung der Intensität eines optischen Signals, bestehend aus einem Schleifeninterferometer (2), der einen optischen Wellenleiter (6) mit nichtlinearem Brechungsindex sowie optische Kopplungsmittel (8) aufweist, einer Quelle (24, 26) eines zu steuernden optischen Signals, die mit den Kopplungsmitteln (8) verbunden ist, sowie einer mit den Kopplungsmitteln (8) verbundenen Quelle (18, 20, 22, 24) eines optischen Steuersignals, wobei die Kopplungsmittel (8) so ausgebildet sind, daß das zu steuernde Signal in zwei Signale geteilt wird, die sich entlang des Wellenleiters (6) in Gegenrichtungen ausbreiten, während das Steuersignal sich entlang des Wellenleiters (6) in einer Richtung ausbreitet, um die Phase der erwähnten zwei Signale zu steuern, wobei die zwei Signale bei erneuter Einleitung in die Kopplungsmittel (8) interferometrisch kombiniert werden, um an einem Anschluß (12) der Kopplungsmittel (8) ein Ausgangssignal zu erzeugen, dadurch gekennzeichnet, daß die Quelle (18, 20, 22, 24) des optischen Steuersignals derart ausgestaltet ist, daß sie ein optisches Steuersignal erzeugt, das durch .mindestens zwei Reihen optischer Impulse gebildet ist, wobei die Charakteristiken der Impulsreihen derart gewählt sind, daß die Impulsreihen nicht interferieren.

5. Einrichtung nach Anspruch 4 dadurch gekennzeichnet, daß die Quelle (18, 20, 22, 24) des optischen Steuersignals derart ausgebildet ist, daß sie ein optisches steuersignal erzeugt, das durch mindestens zwei Reihen optischer Impulse mit unterschiedlicher Wellenlängen gebildet ist.

6. Einrichtung nach Anspruch 4 dadurch gekennzeichnet, daß die Quelle (18, 20, 22, 24) des optischen Steuersignals mindestens eine erste Quelle (18) optischer Impulse und eine zweite Quelle (20) optischer Impulse aufweist, wobei die von den Quellen (18, 20) erzeugten Impulse die gleiche Wellenlänge aufweisen und sich nicht überlappen, wenn sie zur Bildung des optischen Steuersignals kombiniert werden.

7. Einrichtung nach Anspruch 4, 5 oder 6 dadurch gekennzeichnet, daß der Schleifeninterferometer (2) als Sagnac-Schleifeninterferometer ausgeführt ist.

8. Einrichtung nach Anspruch 7 dadurch gekennzeichnet, daß der Wellenleiter (6) als eine Lichtleitfaser ausgebildet ist.

9. Einrichtung nach Anspruch 8 dadurch gekennzeichnet, daß die Lichtleitfaser eine Siliziumdioxid-Lichtleitfaser ist.

10. Optischer Schalter, der eine Einrichtung nach einem der Ansprüche 4 bis 9 beinhaltet, dadurch gekennzeichnet, daß die Quelle (18, 20, 22, 24) des optischen Steuersignals so ausgestaltet ist, daß, wenn sämtliche Impulsreihen im Wellenleiter vorhanden sind, die zwei Signale sich im wesentlichen gegenphasig verhalten, wenn sie im Kopplungsmittel (8) interferometrisch kombiniert werden.

## Revendications

1. Procédé de commande de l'intensité d'un signal optique comprenant la séparation d'un signal optique en entrée en deux signaux et en faisant se propager lesdits deux signaux dans des sens opposés le long d'un guide d'onde optique (6) présentant un indice de réfraction non linéaire tout en faisant se propager un signal optique de commande de façon unidirectionnelle le long du guide d'onde optique (6) de façon à commander la phase desdits deux signaux, et à combiner par interférométrie lesdits deux signaux après leur propagation le long du guide d'onde afin de produire un signal optique de sortie commandé, caractérisé en ce que le signal optique de commande comprend au moins deux flux d'impulsions optiques, les caractéristiques des flux d'impulsions étant telles qu'ils ne soient pas interférométriques.

2. Procédé selon la revendication 1, dans lequel les flux d'impulsions optiques présentent des longueurs d'onde différentes.

3. Procédé selon la revendication 1, dans lequel les flux d'impulsions optiques ne se chevauchent pas lorsqu'ils sont combinés pour former le signal de commande.

4. Dispositif destiné à commander l'intensité d'un signal optique comprenant un interféromètre à boucle (2) incluant un guide d'onde optique (6) qui présente un indice de réfraction non linéaire et un moyen de couplage optique (8), une source (24, 26) d'un signal optique à commander couplée au moyen de couplage (8), et une source (18, 20, 22, 24) d'un signal de commande optique couplée au moyen de couplage (8), le moyen de couplage (8) étant configuré de façon à ce que le signal à commander soit séparé en deux signaux qui se propagent dans des sens opposés le long du guide d'onde (6), le signal de commande se propageant de façon unidirectionnelle le long du guide d'onde en vue de commander la phase desdits deux signaux, et lesdits deux signaux étant combinés par interférométrie lorsqu'ils rentrent à nouveau dans le moyen de couplage (8) afin de produire un signal de sortie au niveau d'un accès (12) du moyen de couplage (8), caractérisé en ce que la source (18, 20, 22, 24) d'un signal de commande optique est configurée afin de produire un signal optique de commande comprenant au moins deux flux d'impulsions optiques, les caractéristiques des flux d'impulsions étant telles qu'ils ne soient pas interférométriques.

5. Dispositif selon la revendication 4, dans lequel la source (18, 20, 22, 24) d'un signal de commande optique est configurée de façon à produire un signal optique de commande comprenant au moins deux flux d'impulsions optiques présentant des longueurs d'onde différentes.

6. Dispositif selon la revendication 4, dans lequel la source (18, 20, 22, 24) d'un signal de commande optique comprend au moins une première source (18) d'impulsions optiques et une seconde source (20) d'impulsions optiques, les impulsions produites par lesdites sources (18, 20) présentant la même longueur d'onde et ne se chevauchant pas lorsqu'elles sont combinées pour former le signal de commande optique.

7. Dispositif selon les revendications 4, 5 ou 6, dans lequel l'interféromètre à boucle (2) comprend un interféromètre à boucle de Sagnac.

8. Dispositif selon la revendication 7, dans lequel le guide d'onde (6) comprend une fibre optique.

9. Dispositif selon la revendication 8, dans lequel la fibre optique est une fibre optique à base de silice.

10. Commutateur optique comprenant un dispositif selon l'une quelconque des revendications 4 à 9, dans lequel la source (18, 20, 22, 24) d'un signal de commande optique est configurée de façon à ce que lorsque la totalité desdits flux d'impulsions sont présents dans le guide d'onde, lesdits deux signaux sont pratiquement en opposition de phase lorsqu'ils sont combinés par interférométrie dans ledit moyen de couplage (8).
